(19) Europäisches Patentamt
European Patent Office
Office européen des brevets

(11) **EP 2 043 289 A1**

(12) **EUROPEAN PATENT APPLICATION**

(43) Date of publication:
**01.04.2009 Bulletin 2009/14**

(51) Int Cl.:
**H04L 1/00** (2006.01)

(21) Application number: **07291184.5**

(22) Date of filing: **28.09.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(71) Applicant: **Alcatel Lucent**<br>**75008 Paris (FR)** | (72) Inventor: **Veith, Gustav, Dr.**<br>**75378 Bad Liebenzell (DE)**<br><br>(74) Representative: **Kohler Schmid Möbus**<br>**Patentanwälte**<br>**Ruppmannstrasse 27**<br>**70565 Stuttgart (DE)**<br><br>Remarks:<br>Amended claims in accordance with Rule 137(2) EPC. |

(54) **Method and communication system for transmitting a date signal over an optical transmission system**

(57)    A method for transmitting a data signal (2) over an optical transmission system (4a), the method comprising the steps of: at a transmitter side (5a), processing the data signal (2) to generate an FEC encoded data signal (2a); transmitting the FEC encoded data signal (2a) over the optical transmission system (4a); at a receiver side (9a), receiving the FEC encoded data signal (2a) and processing the received FEC encoded data signal (2a) to correct errors caused by the transmission. The method further comprises the steps of: at the transmitter side (5a), separating the FEC encoded data signal (2a) into a base rate signal (12) and an overhead rate signal (13), the base rate signal (12) being transmitted over the optical transmission system (4a) through a transmission channel (3), the overhead rate signal (13) being transmitted over the optical transmission system (4a) through an overhead channel (14).

Fig. 2

EP 2 043 289 A1

**Description**

Background of the Invention

The invention relates to a method for transmitting a data signal over an optical transmission system, the method comprising the steps of: at a transmitter side, processing the data signal to generate an FEC encoded data signal, transmitting the FEC encoded data signal over the optical transmission system; at a receiver side, receiving the FEC encoded data signal and processing the received FEC encoded data signal to correct errors caused by the transmission. The invention also relates to a communication system for transmission of a data signal, comprising: a transmitter which comprises an FEC encoder for processing the data signal to generate an FEC encoded data signal, an optical transmission system for transmitting the FEC encoded data signal, and a receiver for receiving the FEC encoded data signal, the receiver comprising an FEC decoder for processing the received FEC encoded data signal to correct errors caused by the transmission.

Current long-haul dense wavelength division multiplexing (DWDM) optical transmission systems are usually equipped with a Forward Error Correction (FEC) facility in order to enhance the transmission channel performance and/or system margin (Optical signal to Noise Ratio, OSNR sensitivity) at the channel bit rate B. The system (OSNR) gain, normally referred to as FEC gain (in dB), is provided at the expense of increasing the original bit rate B by the FEC overhead (OH) bit rate $B_{OH}$, resulting in a higher overall transmission rate of:

$$B_F = B + B_{OH}.$$

Standard Reed-Solomon (RS255/239) based FEC exhibits an FEC overhead ratio of around 7%., i.e. for a B= 10Gbit/s (40Gbit/s) base rate channel the resulting FEC-based transmission rate $B_F$ (overall bit rate) is typically 10.7 Gbit/s (43Gbit/s). Due to the increase of the channel bit rate B, transmission impairments are more serious and the system margins are reduced with respect to the original base rate channel. In addition, usually the performance of the associated optical and electronic components in the transmitter/receiver subsystems is detrimentally affected by progressing to higher signal speed. Thus, the system penalty due to the increase of effective transmission rate of FEC based channels inhibits to fully exploit the FEC gain.

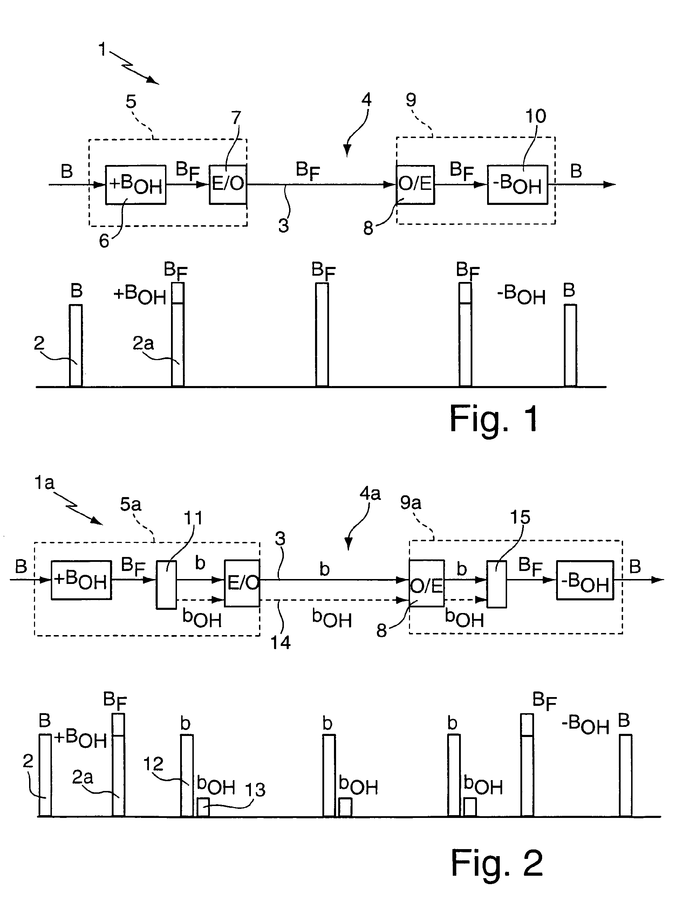

Fig. 1 (top) shows a communication system **1** for transmission of a data signal **2** (with bit rate **B**, see the channel allocation at the bottom of Fig. 1) over a transmission channel **3** of an optical transmission system **4**. The communication system 1 comprises a transmitter **5** with an FEC encoder **6** for processing the data signal 2 by addition of an FEC overhead with overhead bit rate $B_{OH}$ to generate an FEC encoded data signal **2a** having an overall bit rate $B_F = B + B_{OH}$. The FEC encoded electrical data signal 2a is converted in an E/O-converter **7**, e.g. a laser diode, transmitted over the transmission system 4 through the transmission channel 3 and then reconverted to the electrical domain in an O/E-converter **8** (photo-diode) of a receiver **9**. The received FEC encoded data signal 2a is then processed in an FEC decoder **10** for correction of errors caused by the transmission over the optical transmission system 4, the FEC decoder 10 removing the FEC overhead $B_{OH}$ from the FEC encoded data signal 2a, thus reconstructing the data signal **2** with the original bit rate B.

As in the communication system 1 described above, different types of FEC implementations require different FEC overhead ratios, the E/O- and O/E-converters 7,8 and the design of the optical transmission system 4, in particular of the transmission channel 3 need to be adapted to the increased FEC-based overall bit rate (data transmission rate) $B_F$. The system outage performance specification and the associated mean time before failure (MTBF) of the subsystem components must guarantee reliable system operation within the specified product life time. In case of unexpected components or fiber link degradations a system outage might occur and in case of network reconfiguration/extension a system replacement might become necessary.

From US 6,675,340 B1, a communication system and a method for using forward error correction are known which improve transmission reliability in a packetized data network by transmitting packets containing FEC error data separately from packets containing voice data, the packets containing the error data being transmitted a predetermined number of frames before the voice packets to increase the probability that either the voice packet or the error packet will be received.

Object of the Invention

It is the object of the invention to provide a method and a communication system for transmitting a data signal over an optical transmission system, in particular a DWDM transmission system, using forward error correction with variable system margins and extended system tolerances.

Short Description of the Invention

According to a first aspect of the invention, this object is achieved by a method as described in the introduction, further comprising the steps of: at the transmitter side, separating the FEC encoded data signal into a base rate signal and an overhead rate signal, the base rate signal being transmitted over the optical transmission system through a transmission channel, the overhead rate signal being transmitted over the optical transmission system through an overhead channel.

By processing the FEC encoded data signal to form a base rate signal and an overhead rate signal which are transmitted in parallel through different wavelength channels over the optical transmission system, the overall bit rate $B_F$ can be split up into a base rate b of the base rate signal and an overhead rate $b_{OH}$ of the overhead rate signal. The base rate b may correspond to the bit rate B of the original data signal, thus allowing transmission of the FEC encoded data signal through the transmission channel with a constant bit rate, irrespective of the FEC overhead ratio used. The overhead channel and the transmission channel usually are implemented in the same transmission fibre having a plurality of channels with different wavelength, but otherwise (almost) identical transmission characteristics.

The proposed solution allows to deliberately increase the FEC overhead capacity without impacting the transmission characteristics of the base rate optical transmission channel, enabling to adapt the system performance of an existing transmission system to variable needs of different long-haul/ultra-long haul transport network applications or to enhance the performance of installed systems in case of network upgrade requirements. The invention can also be applied beneficially to counteract against short/long term system or fiber link degradations extending the mean-time-before failure (MTBF) of installed system infrastructure.

Another important advantage of the proposed solution is the opportunity to introduce new generations of enhanced FEC (with different FEC overhead) without the need to modify or adapt the basic opto-electronic transmitter/receiver building blocks of the communication system. This enables to build up a uniform basic transmission system product platform which can be upgraded deliberately step-by-step by enhanced FEC equipment whenever a system upgrade or a network reconfiguration are required, respectively.

In a preferred variant, at the transmitter side, at least two FEC encoded data signals are separated into at least two base rate signals and at least two overhead rate signals, the overhead rate signals of the at least two FEC encoded data signals being aggregated to form an aggregated overhead rate signal which is transmitted over the optical transmission system through the overhead channel. In contrast thereto, each of the base rate signals is transmitted (usually at the base rate b) over a separate transmission channel. As the overhead channel and the base rate channels usually have identical transmission characteristics, with a standard Reed-Solomon (255/239) FEC overhead of 7% of the base rate b, the FEC overhead of a total of 14 data channels can be transmitted as an aggregated overhead rate signal over a single overhead channel. It is understood that, in case that the capacity of one overhead channel is exceeded, more than one overhead channel may be used for transmitting the overhead rate signals.

Preferably, the FEC encoded data signal is separated into the base rate signal and the overhead rate signal in the electrical domain, as performing such a separation in the optical domain would require higher expenditure. For the same reason, the recombination of the base rate signal and the overhead rate signal at the receiver side is preferably also performed in the electrical domain.

In a preferred variant, analogue electronic distortion equalization is performed on the received base rate signal and the received overhead rate signal. In such a way, distortion of both signals transmitted through the transmission channel(s) and the overhead channel, respectively, can be equalized in the electrical domain. Usually, a single analogue electronic equalizer block is used for the equalization of the base rate signals and the overhead rate signals. Using analogue distortion equalization, in particular chromatic dispersion (CD) and polarization mode dispersion (PMD) tolerances can be typically enhanced by 50% - 60%, as shown e.g. in B. Franz et al.: "Adaptive Electronic Feed-Forward Equaliser and Decision Feedback Equaliser for the Mitigation of Chromatic Dispersion and PMD in 43 Gbit/s Optical Transmission Systems", Proceedings of the ECOC, 2006. As the base rate b of the transmission channel(s) is kept constant, the electronic distortion equalizers can be optimized for operation at the base rate b and can thus be kept unchanged in case of an FEC upgrade.

In another highly preferred variant, digital equalization is performed on the received FEC encoded data signal to correct errors caused by the transmission. Digital electronic equalization is typically performed using a maximum-likelihood sequence estimator (MLSE), implemented typically as a Viterbi equalizer, also allowing enhancing of PMD and CD tolerances by more than 100% for some special modulation formats, see e.g. F. Buchali: "Electronic dispersion compensation for enhanced optical transmission", Proceedings of the OFC, 2006. Particularly advantageous results can be produced when combining a soft-out Viterbi equalizer with a soft-in FEC decoder, usually being implemented as an equalizer block for parallel equalization of all the received FEC encoded data signals.

It is understood that electronic distortion equalization and digital equalization are not necessarily alternatives, but may also be combined for the enhancement of system tolerances.

A further aspect of the invention is implemented in a communication system as described in the introduction, wherein the transmitter further comprises a demultiplexer for separating the FEC encoded data signal into a base rate signal and an overhead rate signal, the optical transmission system comprises a transmission channel for transmitting the base rate signal and an overhead channel for transmitting the overhead rate signal, and the receiver comprises a multiplexer for recombining the received base rate signal and the received overhead signal to form the received FEC encoded data signal. The demultiplexing/multiplexing allows for transmitting the base rate signal and the overhead rate signal in parallel over the optical transmission system, the signals transmitted over the different wavelength channels being synchronized in respective clock-data recovery circuits before being processed in the multiplexer at the receiver side.

In a preferred embodiment, the demultiplexer is designed to separate at least two FEC encoded data signals into at least two base rate signals and at least two overhead rate signals, the demultiplexer aggregating the overhead rate signals of the at least two FEC encoded data signals to an aggregated overhead rate signal which is transmitted over the optical transmission system through the overhead channel. In the system described above, the number of transmission channels corresponds to the number of data signals to be transmitted. The number of overhead channels used depends on the number of transmission channels and on the FEC overhead ratio of each transmission channel. It is chosen in such a way that the overhead of all of the overhead rate signals can be transmitted over the optical transmission system in parallel with the base rate signals.

In another preferred embodiment, the demultiplexer is an electronic demultiplexer and the multiplexer is an electronic multiplexer, both of which can be provided with comparatively low expenditure.

In a highly preferred embodiment, the receiver comprises an analogue electronic distortion equaliser for processing the received base rate signal and the received overhead rate signal. As discussed above, in such a way, system tolerances with respect to e.g. CD and PMD can be enhanced.

In yet another preferred embodiment, the receiver comprises a digital equaliser to perform digital equalization on the received FEC encoded data signal before it is processed by the FEC decoder, thus also enhancing system tolerances with respect to distortion, in particular when a soft-out digital electronic equalizer such as a Viterbi equalizer is combined with a soft-in FEC decoder.

Further features and advantages are stated in the following description of exemplary embodiments, with reference to the figures of the drawing, which shows significant details, and are defined by the claims. The individual features can be implemented individually by themselves, or several of them can be implemented in any desired combination.

Brief Description of the Drawings

The invention is shown in the drawing. The following are shown:

Fig. 1     a system configuration (top) and a channel allocation (bottom) of a conventional communication system transmitting an data signal over a transmission channel of an optical transmission system,

Fig. 2     an embodiment of a communication system according to the invention including a demultiplexer for separating the FEC encoded data signal into a base rate signal and an overhead rate signal to be transmitted through an overhead channel,

Fig. 3     a further embodiment of the communication system comprising a DWDM optical transmission system, the demultiplexer aggregating a plurality of overhead rate signals to be transmitted through the overhead channel,

Fig. 4     an embodiment of the communication system corresponding to the configuration shown in Fig. 3, further comprising an analogue electronic distortion equalizer at a receiver side,

Fig. 5     an embodiment of the communication system corresponding to the configuration shown in Fig. 3, further comprising a digital electronic equalizer at the receiver side, and

Fig. 6     a further embodiment of the communication system comprising a DWDM optical transmission system having a large number of transmission channels and a plurality of overhead channels.

Detailed Description of Preferred Embodiments

Fig. 2 (top) shows a communication system **1a** comprising all the components of the communication system 1 shown in Fig. 1. Additionally, the transmitter **5a** shown in Fig. 2 comprises an electronic demultiplexer **11** for separating the data signal 2a - having an overall bit rate of $B_F = B + B_{OH}$ after FEC encoding - into a base rate signal **12** and an overhead rate signal **13,** the former being transmitted over the transmission system **4a** through the transmission channel 3 with a base rate **b**, the latter being transmitted through an overhead channel **14** with an overhead rate $b_{OH}$.

The base rate b and the overhead rate $b_{OH}$ are not necessarily identical to the original channel bit rate B and FEC overhead bit rate $B_{OH}$ of the data signal 2a, yet these quantities are related to each other by the expression:

$$b + b_{OH} = B_F = B + B_{OH},$$

i.e. the overall transmission rate (overall bit rate) $B_F$ is always maintained constant, irrespective of the values of b and $b_{OH}$. After the optical transmission and optoelectronic conversion in the O/E-converter 8, both signals 12, 13 are synchronised by their respective clock-data recovery (CDR) circuits (not shown) and are subsequently recombined in an electronic multiplexer **15** to form the FEC encoded data signal 2a with original data rate $B_F = B + B_{OH}$ which is subsequently processed by the FEC decoder 10, in the ideal case reproducing the data signal 2 with bit rate B provided at the input to the communication system 1a without transmission errors.

In the communication system 1 a, the maximum FEC gain is always provided irrespective of the FEC overhead rate since the optical path bit rate is always kept constant at b, as shown in the bottom part of Fig. 2, representing the corresponding channel allocation and channel load in the electrical and optical domain, respectively.

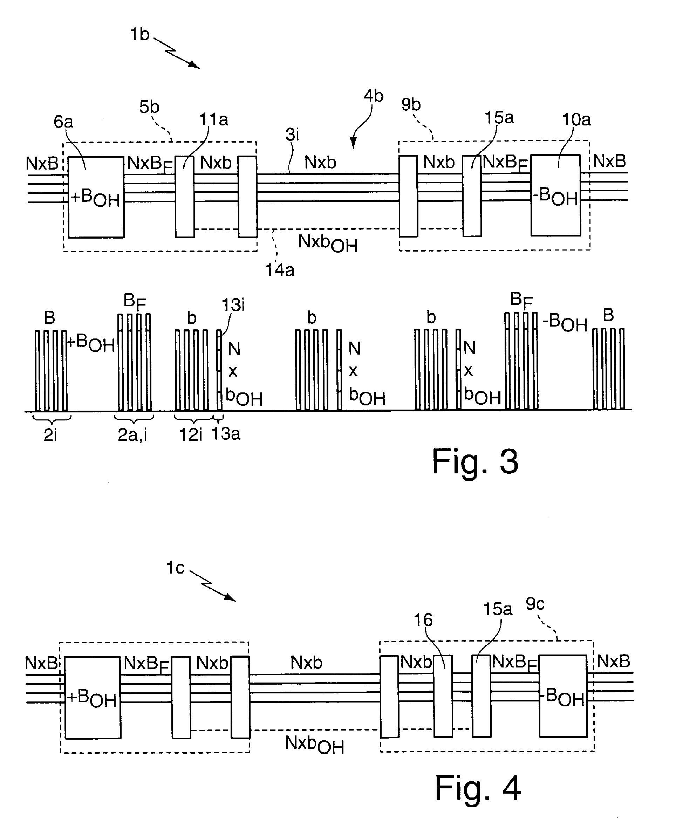

**Fig. 3** shows the extension of the above approach to a multi-channel dense-wavelength division multiplexing (DWDM) communication system **1b**. In the example shown in Fig. 3, a number **N** of DWDM channels with original bit rate B and an increased bit rate of $B_F = B + B_{OH}$ are first encoded in parallel in an FEC encoder **6a** to generate a corresponding number N of FEC encoded data signals **2a,i.** The FEC encoded data signals 2a,i are subsequently separated in an electronic FEC demultiplexer **11a** into a corresponding number N of base rate signals **12i** (i=1, ..., N) transmitted with identical base rate b trough a corresponding number of transmission channels **3i** and into a corresponding number N of FEC overhead rate signals **13i** with respective (identical) overhead rate $b_{OH}$ which are aggregated in the demultiplexer 11a to an aggregate overhead signal **13a,** which is transmitted over an overhead channel 14a in parallel to the DWDM transmission channels 3i over the transmission system 4b. After the transmission and opto-electronic conversion, the base rate signals 12i and the aggregate overhead signal 13a are synchronised by their clock-data recovery (CDR) circuits and subsequently electronically multiplexed in the demultiplexer **15a** to form N FEC encoded data signals 2a,i with original data rates $B_{Fi} = B_i + B_{OH}$ which are then processed by the FEC decoder **10a** for correcting transmission errors.

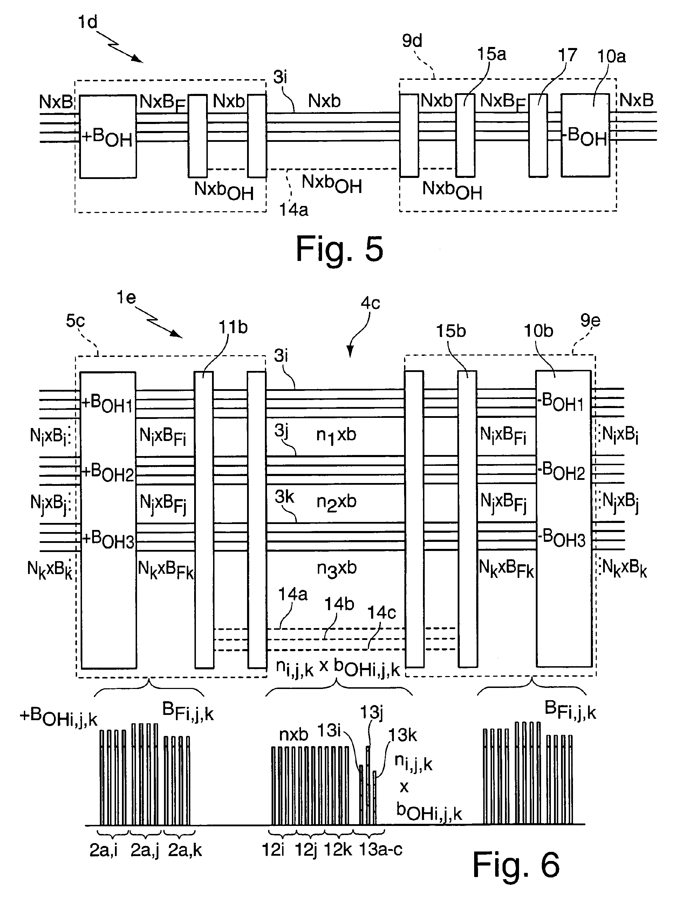

It is understood that the identical overhead rate $b_{OH}$ of the overhead rate signals 13i is only chosen as an example, and that the overhead rate may vary among the FEC encoded data signals 2a,i. Also in this case, the overhead channel 14a may carry the aggregated FEC overhead of several transmission channels 12i with overall data rates $B_{Fi}$. In the case of identical overall data rates with standard RS(255/239) FEC with 7% FEC overhead ratio, the FEC overhead channel 14a is capable to transport the FEC overhead capacity of around fourteen transmission channels 12i. However, for avoiding the system penalty due to the increase of the effective transmission rate, the aggregate overhead rate N x $b_{OHi}$ of the FEC overhead channel 14a should not exceed the standard base transmission rate b. For higher DWDM channel counts (i.e. more than fourteen channels in the above example), additional FEC overhead channels are to be provided, as will be described in detail with respect to Fig. 6 below.

In the following, two ways of correcting errors caused by the transmission of the data signals 2i over the transmission system 4b are described with respect to **Figs. 4 and 5**.

Fig. 4 shows a communication system **1b** which is slightly modified with respect to the communication system 1 a of Fig. 3 in that analogue electronic distortion equalisers (EDE) **16** (shown in Fig. 4 as an EDE block) are inserted in the receiver **9c** before the FEC-overhead multiplexer 15a. This enables to enhance the system tolerances (e.g. chromatic dispersion (CD) or polarisation mode dispersion (PMD)) of the transmission channels 3i transmitting the base rate signals 12i at the (identical) base rate b. By using the analogue electronic distortion equalizers 16, the CD and PMD tolerances of the transmission channels 3i and of the overhead channel 14 can be typically enhanced by 50-60%. Since the base rate of the transmission channels 3i is kept constant, the electronic distortion equalizers 16 can be optimised for operation at the base rate b and can be kept unchanged in the case of an FEC upgrade.

Fig. 5 shows a further communication system **1c** with a modification as compared to the communication system 1a of Fig. 3: A number N+1 of digital electronic equalisers **17** in form of maximum-likelihood sequence estimators (MLSE), implemented typically as so-called Viterbi equalisers (represented as a block in Fig. 5), are inserted in the receiver **9d** after the multiplexer 15a and before the FEC-decoder 10a.

As in the case of analogue electronic distortion equalization (see above), the use of digital electronic equalization may enhance the system tolerances (e.g. CD, PMD) of the transmission channels 3i transmitting at the base rate b and of the overhead channel 15. In such a way, the CD and PMD tolerances can be enhanced by more than 100% for some special modulation formats. In particular, in the example of Fig. 5, the digital electronic equalizers 17 produce a soft output and the FEC decoder **10a** is a soft-in decoder, offering the best results for the enhancement of system tolerances with respect to CD and PMD.

Finally, **Fig. 6** shows a communication system **1e** as a further modification of the communication system 1 c of Fig. 3, comprising a high channel-count dense-wavelength division multiplexing (DWDM) transmission system **4c**. The communication system 1 e of Fig. 6 corresponds essentially to a parallel arrangement of three sub-systems having the configuration of the communication system 1 c shown in Fig. 3, but different data rates. For the description of the signals in each of these sub-systems, a different index i,j,k is used, and, for the sake of simplicity, when reference is made to a characteristic of either of the sub-systems, e.g. the data signals $N_i$, $N_j$, $N_k$ of each sub-system, these characteristics are frequently referred to with a combined suffix i,j,k, e.g. $N_{i,j,k}$.

In the communication system 1e, $N_{i,j,k}$ FEC encoded data signals 2a,i, **2a,j, 2a,k** with original data rate $B_{i,j,k}$ are transmitted over a number of DWDM transmission channels 3i, **3j, 3k** ($i=1,...,n_1$, $j=1,...,n_2$, $k=1,...,n_3$). These FEC encoded data signals 2a,i to 2a,k having an increased bit rate of $B_{Fi,j,k} = B+B_{OHi,j,k}$ are demultiplexed by an electronic FEC-overhead demultiplexer **11 b** to a total number of $n = n_1 + n_2 + n_3$ base rate signals 12 to be transmitted at base rates $b_{i,j,k}$ (being chosen equal in the example of Fig. 6) through the corresponding transmission channels 3i to 3k. The overhead signals 13i, 13j, **13k** of the FEC encoded data signals 2a,i to 2a,k with different overhead rates $B_{OHi,j,k}$ are aggregated in the demultiplexer 11 b to form three aggregated overhead rate signals **13a-c**, each to be transmitted over the transmission system 4c via a separate overhead channel **14a-c** at respective rates of $N_{i,j,k} \times B_{OHi,j,k} = n_{i,j,k} \times b_{OHi,j,k}$.

In contrast to the transmission rate b which is the same for all the transmission channels 3i, 3j, 3k, the transmission rates of the three overhead channels 13a-c are different due to the different FEC overhead rates $B_{OHi,j,k}$ of the three sub-systems. In particular, the overhead rate $b_{OH2}$ of the second overhead channel 14b which is used for transmitting the aggregate overhead signals 13j of the transmission channels 3j of the second sub-system requires the entire overhead capacity, i.e. its overhead rate $b_{OH2}$ is equal to the base rate b. The overhead rates $b_{OH1}$ and $b_{OH3}$ of the aggregated overhead signals 13a, 13c transmitted through the first and third overhead channel 14a, 14c are smaller due to the reduced overhead bit rates $B_{OH1}$, $B_{OH2}$.

After transmission, the base rate signals 12i to 12k and the corresponding overhead rate signals 13a-c are O/E-converted and synchronised by their respective clock-data recovery (CDR) circuits in the O/E-converter **15b** and electronically multiplexed to form the FEC encoded data signals 2a,i to 2a,k with original data rates $B_{Fi,j,k} = B_{i,j,k}+B_{OHi,j,k}$ which are subsequently processed by the FEC decoder **10b,** as described above.

It is understood that each of the overhead channels 14a-c is not necessarily attributed only to a group of FEC encoded data signals having the same data rate $B_{Fi,j,k}$. In particular, depending on the capacity available in the different overhead channels 14a-c, it is possible for the demultiplexer 11 b to generate aggregate overhead signals out of overhead signals of the three groups of FEC encoded data signals 2a,i to 2a,k having different data rates. This is particularly useful if the capacity of one of the overhead channels, e.g. the second overhead channel 14b in the example of Fig. 6, is exceeded due to the relatively high overhead bit rate $B_{OH2}$ of the second group of FEC encoded data signals 2a,j. As the overhead rate $B_{OH3}$ of the third group of FEC encoded data signals 2a,k is smaller, one or more of the overhead rate signals 13j usually forming the second aggregate overhead signal 13b may be aggregated together with the overhead signals 13k of the third group of FEC encoded data signals 13k to form the third overhead rate signal 13c, thus reducing the capacity which is required for the second overhead channel 14b. The process described above may be performed dynamically, i.e. in operation of the communication system, taking changes of the configuration into account, e.g. a variation of the number of data signals due to channel dropping.

Although in the above examples, an FEC encoded data signal is separated into a base rate signal and an overhead rate signal, the person skilled in the art will appreciate that it is not required to split up an FEC encoded data signal for the purpose of the invention. As an alternative, the data signal to be transmitted over the transmission system may be processed (e.g. in an FEC coder) to generate an FEC code, the FEC code thus produced and the original data (e.g. provided at parallel outputs of the FEC coder) being transmitted over two separate wavelength channels over the transmission system. In such a way, a true separation of the FEC code and the data signal is provided, as only the FEC code is transmitted through the overhead channel. In the receiver, the received data signal is processed to correct errors caused by the transmission of the data signal using the FEC code transmitted via the separate overhead channel. In such a way, the use of a demultiplexer / multiplexer in the transmitter / receiver may be avoided.

In summary, the above approach offers the opportunity to introduce new generations of enhanced FEC (with different FEC overhead) without the need to modify or adapt the basic opto-electronic transmitter/receiver building blocks and the optical transmission system, as the transmission rates of the transmission channels can be kept constant irrespective of the required FEC overhead capacities. In particular, it is relatively easy to adapt an existing communication system as shown in Fig.1 to the above approach by replacing/modifying the transmitter and receiver, respectively, but leaving the transmission system unchanged, as some of the wavelength channels which are used for data transmission in a conventional system can be used for the transmission of overhead signals without modifying its hardware (fiber link or fiber links).

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the spirit and scope of the invention, as defined by the appended claims, and equivalents thereof.

**Claims**

1. A method for transmitting a data signal (2, 2i) over an optical transmission system (4a to 4c), the method comprising the steps of:

at a transmitter side (5a to 5c), processing the data signal (2, 2i) to generate an FEC encoded data signal (2a, 2a,i to 2a,k);
transmitting the FEC encoded data signal (2a, 2a,i to 2a,k) over the optical transmission system (4a to 4c),
at a receiver side (9a to 9e), receiving the FEC encoded data signal (2a, 2a,i to 2a,k) and processing the received FEC encoded data signal (2a, 2a,i to 2a,k) to correct errors caused by the transmission,

**characterized by** the steps of:

at the transmitter side (5a to 5c), separating the FEC encoded data signal (2a, 2a,i to 2a,k) into a base rate signal (12, 12i to 12k) and an overhead rate signal (13, 13i to 13k), the base rate signal (12, 12i to 12k) being transmitted over the optical transmission system (4a to 4c) through a transmission channel (3, 3i to 3k), the overhead rate signal (13, 13i to 13k) being transmitted over the optical transmission system (4a to 4c) through an overhead channel (14, 14a-c).

2. The method according to claim 1, wherein at the transmitter side (5b, 5c), at least two FEC encoded data signals (2a,i; 2a,j; 2a,k) are separated into at least two base rate signals (12i; 12j; 12k) and at least two overhead rate signals (13i to 13k), the overhead rate signals (13i to 13k) of the at least two FEC encoded data signals (2a,i to 2a,k) being aggregated to form an aggregated overhead rate signal (13a-c) which is transmitted over the optical transmission system (5a to 5c) through the overhead channel (14a-c).

3. The method according to claim 1, wherein the FEC encoded data signal (2a, 2a,i to 2a,k) is separated into the base rate signal (12, 12i to 12k) and the overhead rate signal (13, 13i to 13k) in the electrical domain.

4. The method according to claim 1, wherein analogue electronic distortion equalization is performed on the received base rate signal (12i) and the received overhead rate signal (13i).

5. The method according to claim 1, wherein digital equalization is performed on the received FEC encoded data signal (2a,i) to correct errors caused by the transmission.

6. A communication system (1a to 1e) for transmission of a data signal (2, 2i), comprising:

a transmitter (5a to 5c) which comprises an FEC encoder (11, 11 a, 11 b) for processing the data signal (2, 2i) to generate an FEC encoded data signal (2a, 2a,i to 2a,k),

an optical transmission system (4a to 4c) for transmitting the FEC encoded data signal (2a, 2a,i to 2a,k), and
a receiver (9a to 9e) for receiving the FEC encoded data signal (2a, 2a,i to 2a,k), the receiver (9a to 9e) comprising an FEC decoder (10, 10a, 10b) for processing the received FEC encoded data signal (2a, 2a,i to 2a,k) to correct errors caused by the transmission,

**characterized in that**
the transmitter (5a to 5c) further comprises a demultiplexer (11, 11 a, 11 b) for separating the FEC encoded data signal (2a; 2a,i to 2a,k) into a base rate signal (12; 12i to 12k) and an overhead rate signal (13, 13i to 13k),
the optical transmission system (4a to 4c) comprises a transmission channel (3, 3i to 3k) for transmitting the base rate signal (12; 12i to 12k) and an overhead channel (14, 14a-c) for transmitting the overhead rate signal (13, 13i to 13k), and
the receiver (9a to 9e) comprises a multiplexer (15, 15a, 15b) for recombining the received base rate signal (12, 12i to 12k) and the received overhead rate signal (13, 13i to 13k) to form the received FEC encoded data signal (2a; 2a,i to 2a,k).

7. The communication system according to claim 6, wherein the demultiplexer (11a, 11b) is designed to separate at least two FEC encoded data signals (2a, i to 2a,k) into at least two base rate signals (12i to 12k) and at least two overhead rate signals (13i to 13k), the demultiplexer (11a, 11b) aggregating the overhead rate signals (13i to 13k) of the at least two FEC encoded signals (2a,i to 2a,k) to an aggregated overhead rate signal (13a-c) which is transmitted over the optical transmission system (4b, 4c) through the overhead channel (14a-c).

8. The communication system according to claim 6, wherein the demultiplexer (11, 11a, 11b) is an electronic demultiplexer and the multiplexer (15, 15a, 15b) is an electronic multiplexer.

9. The communication system according to claim 6, wherein the receiver (9c) comprises an analogue electronic distortion equaliser (16) for processing the received base rate signal (12i) and the received overhead rate signal (13i).

10. The communication system according to claim 6, wherein the receiver (9d) comprises a digital equaliser (17) to perform digital equalization on the received FEC encoded data signal (2a,i) before it is processed by the FEC decoder (10a).

**Amended claims in accordance with Rule 137(2) EPC.**

**1.** A method for transmitting a data signal (2, 2i) over an optical transmission system (4a to 4c), the method comprising the steps of:

at a transmitter side (5a to 5c), processing the data signal (2, 2i) to generate an FEC encoded data signal (2a, 2a,i to 2a,k);
transmitting the FEC encoded data signal (2a, 2a,i to 2a,k) over the optical transmission system (4a to 4c),
at a receiver side (9a to 9e), receiving the FEC encoded data signal (2a, 2a,i to 2a,k) and processing the received FEC encoded data signal (2a, 2a,i to 2a,k) to correct errors caused by the transmission,
further comprising the steps of:

at the transmitter side (5a to 5c), separating the FEC encoded data signal (2a, 2a,i to 2a, k) into a base rate signal (12, 12i to 12k) and an overhead rate signal (13, 13i to 13k), the base rate signal (12, 12i to 12k) being transmitted over the optical transmission system (4a to 4c) through a transmission channel (3, 3i to 3k), the overhead rate signal (13, 13i to 13k) being transmitted over the optical transmission system (4a to 4c) through an overhead channel (14, 14a-c),

**characterized in that**
at the transmitter side (5b, 5c), at least two FEC encoded data signals (2a,i; 2a,j; 2a,k) are separated into at least two base rate signals (12i; 12j; 12k) and at least two overhead rate signals (13i to 13k), the overhead rate signals (13i to 13k) of the at least two FEC encoded data signals (2a,i to 2a,k) being aggregated to form an aggregated overhead rate signal (13a-c) which is transmitted over the optical transmission system (5a to 5c) through the overhead channel (14a-c).

**2.** The method according to claim 1, wherein the FEC encoded data signal (2a, 2a,i to 2a,k) is separated into the base rate signal (12, 12i to 12k) and the overhead rate signal (13, 13i to 13k) in the electrical domain.

**3.** The method according to claim 1, wherein analogue electronic distortion equalization is performed on the received base rate signal (12i) and the received overhead rate signal (13i).

**4.** The method according to claim 1, wherein digital equalization is performed on the received FEC encoded data signal (2a,i) to correct errors caused by the transmission.

**5.** A communication system (1a to 1e) for transmission of a data signal (2, 2i), comprising:

a transmitter (5a to 5c) which comprises an FEC encoder (11, 11a, 11b) for processing the data signal (2, 2i) to generate an FEC encoded data signal (2a, 2a,i to 2a,k),
an optical transmission system (4a to 4c) for transmitting the FEC encoded data signal (2a, 2a,i to 2a,k), and
a receiver (9a to 9e) for receiving the FEC encoded data signal (2a, 2a,i to 2a,k), the receiver (9a to 9e) comprising an FEC decoder (10, 10a, 10b) for processing the received FEC encoded data signal (2a, 2a,i to 2a,k) to correct errors caused by the transmission, wherein
the transmitter (5a to 5c) further comprises a demultiplexer (11, 11a, 11b) for separating the FEC encoded data signal (2a; 2a,i to 2a,k) into a base rate signal (12; 12i to 12k) and an overhead rate signal (13, 13i to 13k),
the optical transmission system (4a to 4c) comprises a transmission channel (3, 3i to 3k) for transmitting the base rate signal (12; 12i to 12k) and an overhead channel (14, 14a-c) for transmitting the overhead rate signal (13, 13i to 13k), and
the receiver (9a to 9e) comprises a multiplexer (15, 15a, 15b) for recombining the received base rate signal (12, 12i to 12k) and the received overhead rate signal (13, 13i to 13k) to form the received FEC encoded data signal (2a; 2a,i to 2a, k),

**characterized in that**
the demultiplexer (11a, 11b) is designed to separate at least two FEC encoded data signals (2a,i to 2a,k) into at least two base rate signals (12i to 12k) and at least two overhead rate signals (13i to 13k), the demultiplexer (11a, 11b) aggregating the overhead rate signals (13i to 13k) of the at least two FEC encoded signals (2a,i to 2a,k) to an aggregated overhead rate signal (13a-c) which is transmitted over the optical transmission system (4b, 4c) through the overhead channel (14a-c).

**6.** The communication system according to claim 5, wherein the demultiplexer (11, 11a, 11b) is an electronic demultiplexer and the multiplexer (15, 15a, 15b) is an electronic multiplexer.

**7.** The communication system according to claim 5, wherein the receiver (9c) comprises an analogue electronic distortion equaliser (16) for processing the received base rate signal (12i) and the received overhead rate signal (13i).

**8.** The communication system according to claim 5, wherein the receiver (9d) comprises a digital equaliser (17) to perform digital equalization on the received FEC encoded data signal (2a,i) before it is processed by the FEC decoder (10a).

Fig. 1

Fig. 2

Fig. 3

Fig. 4

Fig. 5

Fig. 6

**European Patent Office**

**EUROPEAN SEARCH REPORT**

Application Number

EP 07 29 1184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 191 726 A (TELLABS DENMARK AS [DK]) 27 March 2002 (2002-03-27) * column 1, paragraph 4 - column 2, paragraph 5 * * column 2, paragraph 7 - column 3, paragraph 12 * | 1-3,6-8 | INV. H04L1/00 |
| Y | * column 6, paragraph 24 - paragraph 27 * * column 7, paragraph 29 - paragraph 32; figures 3,4 * | 4,5,9,10 | |
| X | SHOU-KUO SHAO ET AL: "WDM CODING FOR HIGH-CAPACITY LIGHTWAVE SYSTEMS" JOURNAL OF LIGHTWAVE TECHNOLOGY, IEEE SERVICE CENTER, NEW YORK, NY, US, vol. 12, no. 1, January 1994 (1994-01), pages 137-148, XP000460016 ISSN: 0733-8724 * page 138, left-hand column; figure 2 * | 1,3,6,8 | |
| X | EP 1 033 843 A (LUCENT TECHNOLOGIES INC [US]) 6 September 2000 (2000-09-06) * page 15, line 10 - line 33; figure 12 * | 1,3,6,8 | TECHNICAL FIELDS SEARCHED (IPC) H04L |
| X | US 2004/096213 A1 (PERKINS DREW D [US] ET AL) 20 May 2004 (2004-05-20) * page 3, right-hand column, paragraph 31 - page 4, right-hand column, paragraph 32; figures 4,5 * | 1,3,6,8 | |
| Y | EP 1 630 983 A (FUJITSU LTD [JP]) 1 March 2006 (2006-03-01) * page 3, paragraph 23 * | 4,5,9,10 | |
| A | * page 6, paragraph 48 - paragraph 54; figures 1,2 * | 1,6 | |

The present search report has been drawn up for all claims

| Place of search | Date of completion of the search | Examiner |
|---|---|---|
| The Hague | 11 March 2008 | Papantoniou, Antonis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT ON EUROPEAN PATENT APPLICATION NO. EP 07 29 1184

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2008

| Patent document cited in search report | Publication date | Patent family member(s) | Publication date |
|---|---|---|---|
| EP 1191726 A | 27-03-2002 | NONE | |
| EP 1033843 A | 06-09-2000 | AU 2063300 A | 07-09-2000 |
| | | CA 2299947 A1 | 04-09-2000 |
| | | CN 1283905 A | 14-02-2001 |
| | | US 6516436 B1 | 04-02-2003 |
| US 2004096213 A1 | 20-05-2004 | NONE | |
| EP 1630983 A | 01-03-2006 | WO 2004109957 A1 | 16-12-2004 |
| | | JP 3881001 B2 | 14-02-2007 |
| | | US 2006072926 A1 | 06-04-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6675340 B1